# EUROPEAN PATENT APPLICATION

(11) **EP 2 733 130 A1**
(43) Date of publication of application: **21.05.2014**
(21) Application number: 12193240.4
(22) Date of filing: 19.11.2012
(51) Int. Cl.: C04B 28/36

(54) **Sulphur cement product**

(71) Applicant: Shell Internationale Research Maatschappij B.V., 2596 HR The Hague (NL)
(72) Inventor: AL-ANSARY, Maraw, Doha 91791 (QA); Scholten, Wilhelmus Johannes Franciscus, Doha 91791 (QA); Sunifar, Parilakathoottu, Doha 91791 (QA)
(74) Representative: Matthezing, Robert Maarten

(57) **Abstract**

The present invention relates to a sulphur cement product comprising sulphur, filler and aggregate, wherein at least 25wt% of the filler is Portland cement.

## Description

### Field of the Invention

The present invention provides sulphur cement products such as sulphur cement, sulphur mortar and sulphur concrete. The invention further provides a process for the preparation of sulphur cement products.

### Background of the Invention

Elemental sulphur or modified sulphur can be used to bind aggregate and filler, thereby providing sulphur cement products such as sulphur mortar and sulphur concrete. Sulphur concrete can be used in a variety of pre-cast concrete applications such as marine defences, paving slabs, road barriers and retaining walls.

It is desirable to prepare durable sulphur cement products that are not susceptible to cracking. In particular it is desirable to prepare sulphur cement products that are durable when exposed to water because sulphur concrete products are often used in marine applications. The present inventors have sought to prepare sulphur cement products with improved durability.

### Summary of the Invention

The present invention provides a sulphur cement product comprising sulphur, filler and aggregate, wherein at least 25wt% of the filler is Portland cement, wherein the weight percentage is based on the total weight of the filler.

The inventors have found that sulphur cement products having improved durability can be prepared using Portland cement as an alternative to fillers such as fly ash, gabbro dust and ground granulated blast furnace slag (GGBS) .

The present invention further provides a process for the preparation of a sulphur cement product comprising the steps of:
(a) admixing sulphur, filler, and aggregate, at a temperature at which the sulphur is molten, wherein at least 25wt% of the filler is Portland cement and wherein the weight percentage is based on the total weight of the filler; and
(b) solidifying the molten sulphur cement product.

### Detailed Description of the Invention

The term "sulphur cement product" refers to a composite comprising sulphur, filler and aggregate. Fillers and aggregate are particulate inorganic materials. Fillers have an average particle size in the range of from 0.1 µm to 0.1 mm. Fine aggregate has an average particle size in the range of from 0.1 to 5mm. Coarse aggregate has an average particle size in the range of from 5 to 40mm. Sulphur mortar of the invention comprises sulphur, filler and fine aggregate, but does not comprise coarse aggregate. Sulphur concrete of the invention comprises sulphur, filler, coarse aggregate, and optionally fine aggregate.

In the sulphur cement product of the present invention at least 25wt% of the filler is Portland cement. This weight percentage is based on the total weight of the filler. Portland cement is defined by ASTM C 150 as "hydraulic cement (cement that not only hardens by reacting with water but also forms a water-resistant product) produced by pulverizing clinkers consisting essentially of hydraulic calcium silicates, usually containing one or more of the forms of calcium sulfate as an inter ground addition." Portland cement is widely available around the world.

Preferably at least 50wt% of the filler of the sulphur cement product of the invention is Portland cement, more preferably at least 75wt% of the filler is Portland cement and most preferably all of the filler, i.e. 100wt% of the filler, is Portland cement.

The amounts of sulphur, filler and aggregate in the sulphur cement products of the invention can be chosen by the skilled person in view of the proposed application of the sulphur cement product. The skilled person will seek to ensure that sufficient sulphur is incorporated to bind the filler and aggregate, that sufficient filler and aggregate are incorporated to provide mechanical strength and that the balance of components provides a mixture with suitable workability for the proposed application. Sulphur mortar preferably comprises from 5 to 40wt% sulphur, from 20 to 75wt% fine aggregate and from 5 to 40wt% filler; more preferably from 5 to 30wt% sulphur, from 40 to 70wt% fine aggregate and from 5 to 30wt% filler. Sulphur concrete preferably comprises from 5 to 40wt% sulphur, from 5 to 50wt% coarse aggregate, from 20 to 60wt% fine aggregate and from 1 to 20wt% filler; more preferably from 5 to 30wt% sulphur, from 25 to 40wt% coarse aggregate, from 25 to 40wt% fine aggregate and from 6 to 15wt% filler. The weight percentages are based upon the weight of the sulphur cement product.

The sulphur concrete optionally comprises modifier. Sulphur modifiers are known to the skilled person and are compounds that improve the durability of sulphur cement products. The amount of modifier is preferably from 0.001 to 1wt%, more preferably from 0.01 to 0.6wt% and most preferably from 0.01 to 0.4wt%, by weight of the sulphur cement product. The modifier is typically one of the most expensive components in the concrete, so it is desirable to limit the amount of modifier. Suitable modifiers include olefinic modifiers such as 5 ethylidene-2-norbornene (ENB), 5 vinyl-2-norbornene (VNB), dicyclopentadiene, limonene or styrene. Alternatively, the modifier may be an organosilane or an organotitanate.

Organosilanes are compounds having at least one carbon-silicon bond or at least one carbon-oxygen-silicon group. Preferred organosilanes are organosilanes of the general molecular formula (I):

(R¹O) ₃Si-A-Si (OR²)₃ (I)

wherein R¹ and R² are independently C₁₋₆ alkyl or hydrogen, and A is a divalent functional group comprising one or more groups chosen from thiol, sulphide, amine or alkenyl groups. Preferably R¹ and R² are ethyl or methyl groups, or hydrogen. Preferably A is a polysulphide group of formula - (CH₂)ₓ-S_{y}- (CH₂)_{z}- wherein x is an integer from 1 to 4, y is an integer from 2 to 8, and z is an integer from 1 to 4. Most preferably x and z are the same and y is from 2 to 6. Particularly preferred organosilanes are bis(3-triethoxysilylpropyl)tetrasulphide (TESPT) and bis(3-triethoxysilylpropyl)disulphide.

The organosilane is alternatively of general formula (II) :

(R³O) ₃Si-A' (II)

wherein R³ is C₁₋₆ alkyl or hydrogen, and A' is a univalent functional group comprising one or more groups chosen from thiol, sulphide, amine or alkenyl groups. Preferably R³ is an ethyl or methyl group or hydrogen. Preferably, A' is a thiol group or sulphide group, having the formula - (CH₂)ₚ-S_{q}- (CH₂)ᵣ-H, wherein p is an integer from 1 to 4, q is an integer from 1 to 8 and r is 0 or an integer from 1 to 4. In one embodiment, q is 1 and r is 0, such that A' is a thiol group. In another embodiment, q is from 2 to 8 and r is from 1 to 4, such that A' is a polysulphide group. In another preferred embodiment, A' is a primary amine group of formula -(CH₂)ₙ-NH₂, wherein n is an integer from 1 to 4. In yet another preferred embodiment, A' is an alkenyl group of formula - (CH₂)ₘ-X, wherein m is an integer from 0 to 4 and X is an alkenyl group. Possible X groups are shown below:

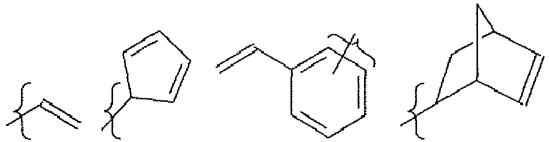

Alternatively, the organosilane may be an organosilane having at least one amino functional group. The organosilane may be functionalised with one amino group or with several amino groups. Suitable organosilanes include 3-aminopropyl triethoxy silane, bis (triethoxysilylpropyl) amine, ,3-bis (3-aminopropyl) - 1, 1, 3, 3-tetramethyldisiloxane, Dynasylan™ 1146 and Dynasylan™ 1151.

The sulphur cement products of the invention are prepared by a process wherein all the components are mixed at a temperature at which the sulphur is molten, i.e. typically above 120°C, preferably in the range of from 120 to 150°C, more preferably in the range of from 125 to 140°C. The mixture is preferably poured into a mould. The sulphur cement product is then solidified by cooling to a temperature at which the sulphur solidifies. After cooling, the sulphur cement product can be demoulded.

Sulphur cement products produced according to the present invention can be used in a variety of applications. Sulphur concrete may be used in pre-castconcrete applications such as marine defences, paving slabs, road barriers and retaining walls.

### Examples

The invention is further illustrated by means of the following non-limiting examples.

Sulphur concrete samples (examples 1-2 and comparative examples 1-2) and sulphur mortar samples (examples 3-4 and comparative example 3) were prepared having the compositions shown in Table 1.

**Table 1**

| | Sulphur (wt%) | Coarse Aggregate (wt%) | Fine Aggregate (wt%) | Filler (wt%) | Modifier (wt%) |
|---|---|---|---|---|---|
| Example 1 | 16.5 | 35.0 | 36.0 (DS) | 12.4 (OPC) | 0.06 |
| Example 2 | 18.0 | 34.1 | 35.6 (WSS) | 12.2 (OPC) | 0.06 |
| Comparative Example 1 | 19.0 | 33.4 | 36.0 (WSS) | 11.5 (FA) | 0.06 |
| Comparative Example 2 | 15.8 | 33.7 | 38.3 (DS) | 12.1 (FA) | 0.10 |
| Example 3 | 21.8 | 0 | 58.1 (DS) | 20.0 (OPC) | 0.10 |
| Example 4 | 23.5 | 0 | 57.6 (WSS) | 18.8 (OPC) | 0.10 |
| Comparative Example 3 | 21.8 | 0 | 58.2 (DS) | 19.9 (G) | 0.10 |

The coarse aggregate for all examples and comparative examples was Gabbro 10mm. The fine aggregate was dune sand (DS) or washed sieved sand (WSS). The dune sand was screened through a 2mm sieve. The washed sieved sand was washed in water and sieved through a 1.18mm sieve. The filler in the examples was Portland cement (OPC) . The filler in the comparative examples was flyash (FA) or gabbro dust (G). The modifier for all examples and comparative examples was bis(3-triethoxysilylpropyl)tetrasulphide (TESPT).

Mixes were prepared by preheating the aggregates, filler and steel moulds for at least 12 hours at 150°C. A mixer was heated to 145°C and then sulphur was added to the mixer pan. Once the sulphur melted in the mixer pan, the aggregates, then the modifier and then the filler were added. The duration of mixing was 15 minutes before addition of filler and 45 minutes after addition of filler. Vibration for 2 minutes on a Retsch sieve shaker was applied after casting the hot mix into the mould. After vibration, the samples were kept inside a thermal insulation box to reduce the cooling rate. The moulds produced cubic samples of dimensions 10x10x10cm³.

The unconfined compressive strength (UCS in MPa) of the samples was tested according to BS EN 12390 part (3)-2009: Testing of hardened concrete- part (3) compressive strength of test specimen. The samples were tested after three days in air, and also after submersion in water for 170 days. The strength retention (%) is reported as:
UCS after submersion in water for 170 days x 100 UCS after three days in air

The results of the strength testing are shown in table 2:

**Table 2**

| | UCS (air, MPa) | UCS (water, MPa) | Strength retention (%) |
|---|---|---|---|
| Example 1 | 53.6 | 61 | 114 |
| Example 2 | 78 | 70 | 90 |
| Comparative Example 1 | 66.2 | Sample cracked | - |
| Comparative Example 2 | 47 | 22.6 | 48 |
| Example 3 | 44 | 45 | 102 |
| Example 4 | 62 | 72 | 116 |
| Comparative Example 3 | 44 | 30 | 68 |

The Examples of the invention show high strength retention after submersion in water for 170 days, whereas the comparative examples show comparatively poor strength retention. The sulphur concrete of comparative example 1 cracked after submersion in water and the compressive strength after submersion could not be measured.

## Claims

1. A sulphur cement product comprising sulphur, filler and aggregate, wherein at least 25wt% of the filler is Portland cement, wherein the weight percentage is based on the total weight of the filler.

2. A sulphur cement product according to Claim 1 wherein at least 50wt% of the filler is Portland cement.

3. A sulphur cement product according to Claim 1 or 2 wherein at least 75wt% of the filler is Portland cement.

4. A sulphur cement product according to any of Claims 1 to 3 wherein 100wt% of the filler is Portland cement.

5. A sulphur cement product according to any of Claims 1 to 4 additionally comprising a sulphur modifier.

6. A sulphur cement product according to Claim 5 wherein the sulphur modifier is present in an amount of from 0.001 to 1wt%, by weight of the sulphur cement product.

7. A sulphur cement product according to Claim 5 or 6 wherein the sulphur modifier is an organosilane.

8. A sulphur cement product according to any of Claims 5 to 7 wherein the sulphur modifier is bis (triethoxysilylpropyl) tetrasulphide.

9. A sulphur cement product according to any of Claims 1 to 8 wherein the sulphur cement product is sulphur concrete, comprising from 5 to 40wt% sulphur, from 5 to 50wt% coarse aggregate, from 20 to 60wt% fine aggregate and from 1 to 20wt% filler, by weight of the sulphur concrete.

10. A process for the preparation of a sulphur cement product comprising the steps of:
(a) admixing sulphur, filler, and aggregate, at a temperature at which the sulphur is molten, wherein at least 25wt% of the filler is Portland cement, wherein the weight percentage is based on the total weight of the filler; and
(b) solidifying the molten sulphur cement product.
